# FASCICULE DE BREVET EUROPEEN

(11) **EP 0 704 295 B1**
(45) Date de publication et mention de la délivrance du brevet: **11.02.1998**
(21) Numéro de dépôt: 95114207.4
(22) Date de dépôt: 11.09.1995
(51) Int. Cl.: B29D 30/38, B29C 70/82, B21F 1/02

(54) **Renforcement d'une matrice en matériau caoutchouteux par des fils**
Drahtverstärkung einer Gummimatrix
Wire reinforcement of a rubber matrix

(30) Priorité: 29.09.1994 FR 9411776
(43) Date de publication de la demande: 03.04.1996
(73) Titulaire: SEDEPRO, F-75015 Paris (FR)
(72) Inventeur: Laurent, Daniel, F-38240 Meylan (FR); Torres Castellano, Miguel, F-63122 Ceyrat (FR)
(74) Mandataire: Bauvir, Jacques

(56) Documents cités:
- EP-A- 0 489 352
- DE-A- 3 215 604
- GB-A- 191 739
- US-A- 2 441 071
- US-A- 3 894 906

## Description

La présente invention concerne le renforcement d'une matrice en matériau caoutchouteux par des fils. En particulier, la présente invention concerne la fabrication des pneumatiques, plus spécialement la fabrication des armatures de renforcement, quel que soit l'endroit dans un pneumatique où l'on envisage de réaliser ou d'utiliser une telle armature.

Le terme "fil" doit bien entendu être compris dans un sens tout à fait général, englobant un monofilament, un multifilament, un câble ou un retors ou un assemblage équivalent, et ceci quelle que soit la matière constituant le fil ou le traitement qu'il a subi, par exemple un traitement de surface pour favoriser son adhésion spontanée sur un support sur lequel il est déposé, ou sa liaison intime avec du caoutchouc.

Dans ce domaine technique, on connaît déjà la solution décrite dans le brevet US-A-3 894 906, qui propose une méthode et machine pour réaliser les ceintures de pneumatiques conforme aux préambules des revendications 1 et 4, consistant à prélever des tronçons de fil et à les déposer les uns après les autres sur une base en caoutchouc. Cependant, la technique décrite ne permet que difficilement de réaliser d'autres renforts que ceux utilisés dans les ceintures. En outre, les moyens d'application du fil sur le support sont incapables de fonctionner à un rythme suffisamment rapide pour assurer une productivité satisfaisante.

Lorsque, dans le présent mémoire, on parle plus spécifiquement de tronçons de fil, on désigne des morceaux de fil individualisés par une coupe.

L'objectif de la présente invention est de proposer un moyen de dépose de tronçons de fils sur une matrice en matériau caoutchouteux, qui soit très économique à fabriquer et à mettre en oeuvre.

L'objectif de la présente invention est de proposer un procédé de fabrication qui permette de réaliser, à partir d'une bobine de fil, aussi bien sous la forme d'un semi-fini que directement sur une ébauche crue en cours de fabrication, plusieurs catégories de renforts à fil non circonférentiel.

Un des objectifs de l'invention quant à la fabrication de semi-finis est de proposer les moyens permettant de réaliser des nappes de renfort comme des nappes de sommet ou des nappes de carcasse telles que déposées tout à fait couramment sur des tambours au moyen de couloirs de guidage appelés "servicers".

Un autre objectif de l'invention quant à la fabrication de semi-finis est de proposer les moyens permettant de réaliser des bandelettes d'une matrice en matériau caoutchouteux renforcée, nécessaires à la fabrication de ceintures telles que celles apparaissant aux figures 6 et 7, ou 10 et 11 du brevet US-A-1 894 237, contenant des fils non circonférentiels, ou bien celles nécessaires à la fabrication du pneumatique décrit dans EP-A-689945 (publié à 3-1-'96 et donc pas compris dans l'etat de la technique).

Dans le présent mémoire, on appelle "bandelette" un produit semi-fini ayant l'allure d'un ruban, de relativement petite largeur, comportant une matrice en matériau caoutchouteux dans laquelle sont noyés, ou au moins sur lequel sont figés par collage, des fils de renforcement s'étendant transversalement dans ladite bandelette. La largeur est considérée comme petite quand il faut, dans une section radiale du pneumatique, utiliser plus qu'une bandelette pour réaliser la totalité du renforcement considéré, par exemple au moins deux bandelettes sur la hauteur du flanc dans une carcasse, ou au moins deux bandelettes sur la largeur de la ceinture.

L'invention propose un procédé de dépose de tronçons de fil sur un support en matériau caoutchouteux cru, dans lequel :
- on fait avancer une longueur prédéterminée de fil dans une chambre cylindrique, à l'intérieur de laquelle tourne un rotor muni de palettes orientées transversalement, lesdites palettes délimitant des logements à l'intérieur desquels le fil est inséré, l'une des parois latérales de ladite chambre cylindrique comportant un orifice d'introduction du fil situé en regard desdits logements,
- la coupe du fil pour en prélever des tronçons est assurée par le bord de chaque palette, en coopération avec l'orifice d'introduction,
- la rotation du rotor emmène chaque tronçon de fil vers ledit support en matériau caoutchouteux où il est retenu par adhésion.

L'invention propose aussi une machine comme décrite dans la revendication 4.

Si l'on fabrique un produit semi-fini, utilisé ensuite sur des machines d'assemblage où il est employé conditionné en bobines, le support est une bande de caoutchouc cru, extrudée en continu, sur laquelle lesdits tronçons viennent se ranger parallèlement les uns aux autres.

Des modifications préférées sont décrites dans les revendications dépendantes.

Si l'on veut exploiter un procédé d'assemblage intégré, le support est un pneumatique cru en cours de fabrication, sur lequel lesdits tronçons viennent se ranger à l'endroit prévu par l'architecture du pneumatique, en formant un angle constant.

Les figures suivantes illustrent l'invention, de façon non limitative, et permettent de bien comprendre comment on peut la réaliser.
La figure 1 est une coupe montrant l'agencement des principaux organes d'une machine selon l'invention ;

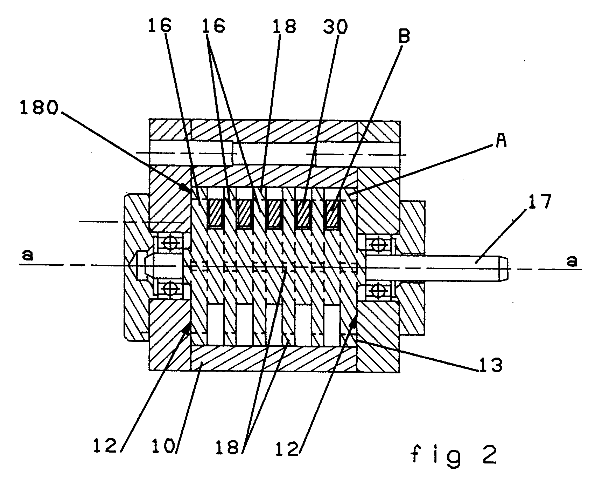

la figure 2 est une coupe selon II,II à la figure 1 ;
les figures suivantes montrent, pour trois organes de la machine, une vue de côté, puis une vue en élévation de chacun de ces organes :
   - la figure 3 est une vue de côté de l'organe A,
      la figure 4 est une vue en élévation de l'organe A,
   - la figure 5 est une vue de côté de l'organe B,
      la figure 6 est une vue en élévation de l'organe B,

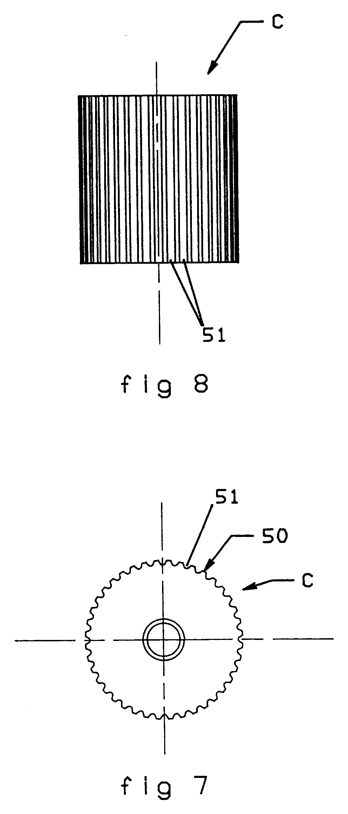

   - la figure 7 est une vue de côté de l'organe C,
      la figure 8 est une vue en élévation de l'organe C.

Les organes essentiels d'une machine selon l'invention, montrés aux différentes figures, constituent un dispositif 1 assurant le prélèvement de tronçons de fil et transportant lesdits tronçons sur ledit support. Comme il a été annoncé ci-dessus, pas plus la nature exacte du support que les conditions d'emploi de la machine (directement sur une machine d'assemblage ou en fabrication de semi-fini) ne font partie de la présente invention.

Pour fixer les idées, on supposera dans la suite que l'invention est appliquée à la fabrication d'une bandelette constituant un semi-fini. Le support 2 est ici un ruban de caoutchouc cru, extrudé au travers d'une filière 20, et est supporté en aval de l'extrusion, par un rouleau 21.

Le dispositif 1 comprend un carter 10 dans lequel est creusée une chambre cylindrique, délimitée par une paroi cylindrique 11, et par deux parois planes latérales 12 perpendiculaires à l'axe aa de ladite chambre cylindrique. L'un des principaux organes du dispositif est un rotor A, mobile en rotation autour de l'axe aa de ladite chambre cylindrique. Ce rotor A est muni de palettes 13 orientées transversalement, lesdites palettes délimitant avec au moins une partie de la paroi cylindrique 11 de la chambre cylindrique chacune un logement pour recevoir le fil. Un orifice 14 d'introduction du fil est situé dans l'une des deux parois latérales 12 de ladite chambre cylindrique, en regard desdits logements. Une ouverture d'échappement 15 est aménagée transversalement dans ladite paroi cylindrique 11.

Le diamètre extérieur du rotor est bien entendu inférieur au diamètre intérieur de la chambre cylindrique au moins d'une valeur correspondant à l'épaisseur du fil utilisé. En règle générale, ce diamètre du rotor est inférieur au diamètre intérieur de la chambre cylindrique d'une valeur légèrement supérieure au diamètre de l'orifice 14, lui même de diamètre légèrement supérieur au plus important des diamètres de fil que l'on souhaite pouvoir utiliser.

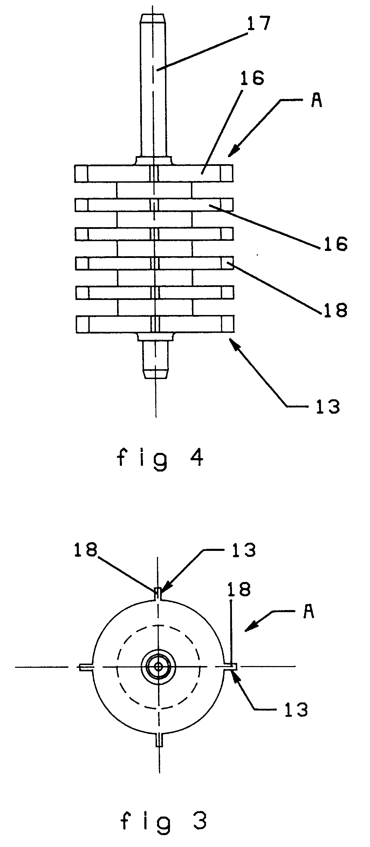

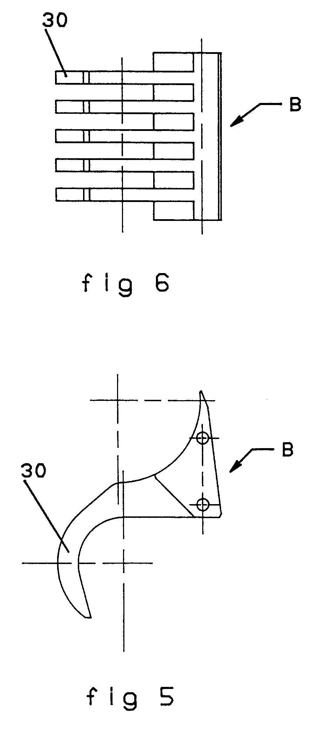

Dans la variante décrite ici, permettant l'utilisation d'un peigne B, le rotor A comporte un ensemble de disques 16 (voir figure 4), solidaires d'un arbre 17, et donc maintenus régulièrement espacés et sans rotation relative entre eux. On peut ainsi intercaler les dents 30 du peigne B (voir figures 5 et 6) entre les disques 16. Chaque disque 16 est muni d'un nombre toujours identique d'ergots 18 régulièrement répartis à sa périphérie. Les ergots 18 appartenant à des disques 16 différents sont ici disposés en regard les uns des autres. Dans le cas particulier illustré ici, les ergots 18 sont alignés, parallèlement à l'axe aa du rotor A. Chaque groupe d'ergots 18 adjacents transversalement forme lesdites palettes 13. Plus généralement, les ergots appartenant à des disques 16 différents forment lesdites palettes 13.

Il faut empêcher l'accumulation indésirable d'un paquet de tronçons dans un espace mort. Le peigne est conformé et disposé de façon à guider chaque tronçon 40 de fil vers l'ouverture d'échappement 15. Il permet de maintenir une section de passage juste suffisante pour un tronçon 40 de fil : les tronçons 40 parvenus à cet endroit peuvent se pousser les uns sur les autres, ils cheminent ainsi de façon certaine vers l'ouverture d'échappement.

Si l'on recherche à ce que chaque tronçon 40 posé sur le ruban de caoutchouc constituant le support 2 soit bien rectiligne, de préférence, afin de rendre très fiable et parfaitement reproductible l'allure prise par chaque tronçon 40, les dents 30 du peigne B forment, avec une paroi opposée 31, un couloir 32 d'échappement dans lequelle le jeu existant entre lesdites dents 30 et ladite paroi opposée 31 diminue lorsque l'on se déplace vers l'ouverture d'échappement 15.

La machine peut comporter avantageusement un galet rotatif C dont le rôle est d'assister à la dépose des tronçons sur le ruban de caoutchouc, par un effet de rouletage. Le galet C est ici disposé à axe de rotation parallèle à l'axe de rotation aa du rotor A. Entre le galet C et le ruban de caoutchouc, subsiste un léger jeu, inférieur à l'épaisseur des tronçons 40 de fil à incruster dans la matrice en caoutchouc. Le galet C présente sa surface cylindrique 50 auxdits tronçons 40 près de ladite ouverture d'échappement 15, et accompagne les tronçons 40 jusqu'à ce qu'ils adhèrent sur le ruban en matériau caoutchouteux cru.

En outre, comme représenté ici, le galet rotatif C peut être conçu de façon à garantir un espacement très régulier entre tous les tronçons 40 de fil que l'on souhaite poser parallèlement entre eux. Le galet C comporte, à sa surface cylindrique 50, une pluralité de rainures 51 rectilignes parallèles à l'axe de rotation du galet C, capables de recevoir chacune un tronçon 40 de fil.

La machine décrite doit être associée à un alimenteur (non représenté) capable d'introduire le fil utilisé par l'orifice 14. Pour en assurer le dévidage hors d'une bobine de stokage, le fil est pincé entre deux galets couverts d'un revêtement anti-dérapant. L'un des galet au moins est motorisé. On peut donc contrôler en continu la longueur de fil introduit au travers de l'orifice 14 par la connaissance de la vitesse tangentielle des galets. N'importe quel type de fil peut être appelé et mesuré de cette manière. A titre purement informatif, le lecteur est renvoyé à la demande de brevet EP 0519295 dans laquelle de nombreuses informations relatives à la motorisation d'un fil sont données.

Bien entendu, pour poser des tronçons 40 de longueur toujours identique, l'ensemble des mouvements de rotation des organes A, C, et la motorisation du fil pour son introduction au travers de l'orifice 14 sont commandés de façon synchrone. Il convient bien entendu que chaque tronçon 40 introduit dans un logement ait une longueur qui ne soit pas supérieure à la longueur du rotor A mesurée le long d'une palette 13, d'une paroi latérale 12 à l'autre. De préférence, les tronçons découpés ont une longueur telle qu'ils occupent, à un jeu fonctionnel près, sensiblement toute la longueur disponible entre parois latérales 12.

La motorisation du dipositif peut très simplement être exécutée à vitesse constante. De même, pour que le pas de pose des tronçons 40 de fil soit régulier, la commande synchrone évoquée ci-dessus est en outre synchronisée au défilement du support, c'est à dire ici au défilement du ruban de caoutchouc 2 sous le dispositif 1.

Le fonctionnement du dispositif est le suivant. La rotation du rotor A assure la coupe du fil pour en prélever des tronçons 40, grâce à la coopération entre le bord 180 de chaque palette 13 et la paroi latérale 12 adjacente, plus précisément entre le bord 180 des ergots 18 du disque 16 adjacent à la paroi latérale 12, et la matière constituant celle-ci autour de l'orifice d'introduction 14. Bien entendu, le jeu entre le plus proche des disques 16 et ladite paroi 12 est réglé en conséquence. Les matériaux constitutifs sont choisis et/ou traités de façon à supporter les contraintes dues à cette coupe par cisaillement du fil.

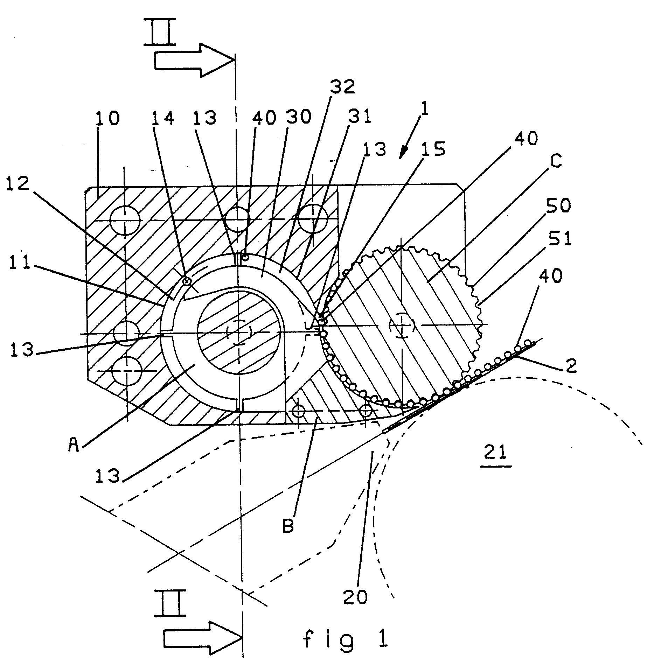

Ensuite, la rotation du rotor A emmène chaque tronçon 40 de fil vers l'ouverture d'échappement 15 (voir figure 1), où il se cale dans une rainure 51. La rotation du galet C emmène alors chaque tronçon 40 vers le support 2 en matériau caoutchouteux, ici un ruban de caoutchouc, à la surface duquel il est retenu par adhésion. En même temps, juste après la coupe dudit tronçon 40 de fil, l'extrémité libre du fil continue de pénétrer dans ledit logement, pour constituer le tronçon suivant, qui sera prélevé par l'ergot 18 suivant, c'est à dire l'ergot situé en arrière par rapport au sens de rotation du rotor A. La longueur de fil nécessaire est ainsi introduite juste avant que l'ergot 18 suivant ne parvienne au droit de l'orifice 14, pendant que la palette 13 précédente pousse le dernier tronçon prélevé vers le galet C.

Examinons maintenant une possibilité pour ajuster l'angle que forme les tronçons 40 de fil par rapport au sens de défilement du support 2. Il est possible de décaler les disques 16 les uns par rapport aux autres pour obtenir un angle d'hélice dont la valeur corresponde à l'angle formé par les tronçons 40 sur le support. Dans ce cas, de préférence, on introduit le fil dans ledit logement sous un angle identique. Bien entendu, en fonctionnement, les disques 16 restent immobiles les uns par rapport aux autres. Dans ce cas, les rainures 51 éventuellement présentes sur le galet rotatif C forment, le même angle d'hélice.

On peut concevoir un dispositif dans lequel cet angle est réglable, y compris celui du galet C si celui-ci est constitué par un empilage de disques pouvant être décalés en rotation relative les uns par rapport aux autres. En variante, on peut utiliser des organes non réglables et prévoir autant de rotors A et de galets C qu'il y a d'angles de pose à obtenir. Il faut alors remplacer les couples de rotor et galet lorsque l'on change d'application.

Une autre possibilité, utilisable pour des angles proches de 90°, pourrait être d'incliner le dispositif par rapport à la direction de défilement du support selon l'angle approprié. En fait, cette possibilité peut être combinée à la précédente : le dispositif 1 en lui-même est conçu ou réglé pour fonctionner, à l'optimum, à un angle caractéristique donné, et l'on peut parcourir une petite plage d'angles par inclinaison du dispositif 1 par rapport à la direction de défilement du support 2.

La bandelette ainsi constituée comporte une matrice en matériau caoutchouteux renforcée essentiellement par des fils 40 disposés côte à côte, et s'étendant transversalement, c'est-à-dire sur l'essentiel de la largeur du ruban de caoutchouc 2. Autrement dit, les tronçons 40 incrustés sur ledit ruban 2 se développent d'un bord à l'autre de la bandelette. Les fils 40 sont disposés selon l'angle voulu en fonction de l'usage de la bandelette dans le pneumatique que l'on souhaite fabriquer.

Pour réaliser une bandelette utilisable dans une carcasse radiale (fils disposés à 90° selon la terminologie usuelle concernant les angles), en bobinant, comme décrit dans EP-A-689945 (publié à 3-1-'96 et donc pas comprise dans l'etat de la technique), la bandelette sur un support torique sur lequel on assemble l'ébauche crue d'un pneumatique, les fils sont bien entendu disposés perpendiculairement par rapport aux bords de la bandelette, c'est à dire perpendiculairement au plan de la figure 1, tandis que le déplacement du ruban 2 est parallèle au plan de la figure 1.

Pour réaliser une bandelette utilisable pour constituer un renfort utilisé dans un bourrelet, ou un renfort utilisé dans certaines ceintures, le défilement du ruban 2 formerait l'angle voulu par rapport au plan de la figure, à savoir formerait l'angle sous lequel on souhaite que soient disposés les fils en nappe de sommet. L'éventail d'angles que l'on peut balayer en utilisant l'invention comme décrit ci-dessus va de 90° à environ 45°.

Si l'on souhaite descendre à des valeurs plus basses, comme par exemple jusqu'à 15°, il convient de préférence d'utiliser un galet C dont l'axe de rotation reste perpendiculaire au sens de défilement du support, les rainures 51 étant creusées en formant l'angle adéquat par rapport à la direction de l'axe du galet C, comme explicité ci-dessus.

## Revendications

1. Procédé de dépose de tronçons de fil sur un support en matériau caoutchouteux, caractérisé en ce que
- on fait avancer une longueur prédéterminée de fil dans une chambre cylindrique, à l'intérieur de laquelle tourne un rotor muni de palettes orientées transversalement, lesdites palettes délimitant des logements à l'intérieur desquels le fil est inséré, l'une des parois latérales de ladite chambre cylindrique comportant un orifice d'introduction du fil situé en regard desdits logements,
- la coupe du fil pour en prélever des tronçons est assurée par le bord de chaque palette, en coopération avec l'orifice d'introduction,
- la rotation du rotor emmène chaque tronçon de fil vers ledit support en matériau caoutchouteux où il est retenu par adhésion.

2. Procédé selon la revendication 1, dans lequel le support est une bande de caoutchouc extrudée en continu, sur laquelle lesdits tronçons viennent se ranger parallèlement les uns aux autres.

3. Procédé selon la revendication 1, dans lequel le support est un pneumatique cru en cours de fabrication, sur lequel lesdits tronçons viennent se ranger à l'endroit prévu par l'architecture du pneumatique.

4. Machine de dépose de tronçons de fil sur un support (2) en matériau caoutchouteux cru, comportant un dispositif assurant le prélèvement de tronçons (40) de fil et transportant lesdits tronçons (40) sur ledit support (2), caractérisé en ce que ledit dispositif comprend :
- une chambre cylindrique, délimitée par une paroi cylindrique (11), et par des parois planes latérales (12) perpendiculaires à l'axe de ladite chambre cylindrique,
- un rotor (A), mobile en rotation autour de l'axe de ladite chambre cylindrique, ledit rotor étant muni de palettes (13) orientées transversalement, lesdites palettes (13) délimitant avec au moins une partie de la paroi cylindrique (11) de la chambre cylindrique chacune un logement pour recevoir le fil,
- un orifice d'introduction (14) du fil situé dans l'une des deux parois latérales (12) de ladite chambre cylindrique, en regard desdits logements,
- une ouverture d'échappement (15) aménagée transversalement dans ladite paroi cylindrique (11),
et dans laquelle la rotation du rotor (A) assure la coupe du fil pour en prélever des tronçons (40), grâce à la coopération entre le bord de chaque palette (13) et la paroi latérale (12) adjacente, autour de l'orifice d'introduction (14), et emmène chaque tronçon (40) de fil vers ledit support (2) en matériau caoutchouteux où il est retenu par adhésion.

5. Machine selon la revendication 4, dans laquelle le rotor (A) comporte un ensemble de disques (16) maintenus espacés et sans rotation relative entre eux lors du fonctionnement du dispositif, le diamètre extérieur des disques étant inférieur au diamètre intérieur de la chambre cylindrique au moins d'une valeur correspondant à l'épaisseur du fil utilisé, chaque disque étant muni d'un nombre identique d'ergots (18) régulièrement répartis à sa périphérie, les ergots (18) appartenant à des disques (16) différents formant lesdites palettes (13), ladite machine comportant en outre un peigne (B) dont les dents (30) sont intercalées entre les disques (16), et sont disposées de façon à guider chaque tronçon de fil vers l'ouverture (15) d'échappement.

6. Machine selon la revendication 5, dans laquelle les dents (30) du peigne (B) forment avec une paroi opposée (31) un couloir (32) d'échappement, et dans laquelle le jeu existant entre lesdites dents et ladite paroi opposée diminue lorsque l'on se déplace vers l'ouverture d'échappement (15).

7. Machine selon l'une des revendications 4 à 6, dans laquelle un galet rotatif (C) est disposé à axe de rotation parallèle à l'axe de rotation du rotor (A), pour présenter sa surface cylindrique (51) auxdits tronçons (40) près de ladite ouverture d'échappement (15), et accompagner les tronçons (40) jusqu'à ce qu'ils adhèrent sur le support (2) en matériau caoutchouteux.

8. Machine selon la revendication 7, dans laquelle le galet (C) comporte, à sa surface cylindrique (51), une pluralité de rainures (52) rectilignes parallèles à l'axe de rotation du galet, capables de recevoir chacune un tronçon (40) de fil.

9. Machine selon l'une des revendications 4 à 8, dans laquelle l'angle que forme chaque palette avec toute droite sécante parallèle à l'axe du rotor est réglable.

## Claims

1. A process of depositing lengths of cord on a support of rubber material, characterised in that
- a predetermined length of cord is advanced into a cylindrical chamber within which a rotor provided with transversely oriented vanes rotates, said vanes defining receptacles into which the cord is inserted, one of the side walls of said cylindrical chamber having a cord introduction orifice located opposite said receptacles,
- the cutting of the cord in order to remove lengths thereof is effected by the edge of each vane, in cooperation with the introduction orifice,
- rotation of the rotor brings each length of cord towards said support of rubber material where it is retained by adhesion.

2. A process according to Claim 1, in which the support is a continuously extruded rubber strip on which said lengths are arranged parallel to each other.

3. A process according to Claim 1, in which the support is a raw tyre in the course of manufacture on which said lengths are arranged at the place provided for by the architecture of the tyre.

4. A machine for the depositing of lengths of cord on a support (2) of raw rubber material, comprising a device removing lengths (40) of cord and transporting said lengths (40) on said support (2), characterised in that said device comprises:
- a cylindrical chamber defined by a cylindrical wall (11) and by plane side walls (12) perpendicular to the axis of said cylindrical chamber,
- a rotor (A) which is movable in rotation about the axis of said cylindrical chamber, said rotor being provided with transversely oriented vanes (13), said vanes (13) each defining, with at least a part of the cylindrical wall (11) of the cylindrical chamber, a receptacle to receive the cord,
- an orifice (14) for the introduction of the cord located in one of the two side walls (12) of said cylindrical chamber facing said receptacles,
- an outlet opening (15) arranged transversely in said cylindrical wall (11),
and in which the rotation of the rotor (A) ensures the cutting of the cord in order to remove lengths (40) thereof, due to the cooperation between the edge of each vane (13) and the adjacent side wall (12) around the introduction orifice (14), and brings each length (40) of cord towards said support (2) of rubber material on which it is retained by adhesion.

5. A machine according to Claim 4, in which the rotor (A) comprises a set of discs (16) held spaced apart and without relative rotation between themselves during operation of the device, the outside diameter of the discs being less than the inside diameter of the cylindrical chamber by at least an amount corresponding to the thickness of the cord used, each disc being provided with an identical number of pegs (18) uniformly distributed on its periphery, the pegs (18) belonging to different discs (16) forming said vanes (13), said machine further comprising a comb (B) having teeth (30) which are interspersed between the discs (16) to guide each length of cord towards the outlet opening (15).

6. A machine according to Claim 5, in which the teeth (30) of the comb (B) form an outlet corridor (32) with a facing wall (31) and in which the clearance present between said teeth and said facing wall decreases on moving towards the outlet opening (15).

7. A machine according to one of Claims 4 to 6, in which a rotary wheel (C) is arranged with its axis of rotation parallel to the axis of rotation of the rotor (A) in order to present its cylindrical surface (51) to said lengths (40) close to said outlet opening (15) and to accompany the lengths (40) until they adhere on the support (2) of rubber material.

8. A machine according to Claim 7, in which the rotary wheel (C) comprises, on its cylindrical surface (51), a plurality of rectilinear grooves (52) parallel to the axis of rotation of the wheel, each capable of receiving a length (40) of cord.

9. A machine according to one of Claims 4 to 8, in which the angle which each vane forms with any secant line parallel to the axis of the rotor is adjustable.

## Patentansprüche

1. Verfahren zum Auftragen von Fadenstücken auf einen Träger aus gummiartigem Material, dadurch gekennzeichnet, daß
- man veranlaßt, daß eine vorbestimmte Fadenlänge in eine zylindrische Kammer nachgeführt wird, in deren Innenraum sich ein Rotor dreht, der mit quer ausgerichteten Schaufeln versehen ist, wobei die genannten Schaufeln Aufnahmen begrenzen, in deren Innenraum der Faden eingeführt wird, wobei eine der Seitenwände der genanntn zylindrischen Kammer eine Einführungsöffnung für den Faden aufweist, die den genannten Aufnahmen gegenüberliegt,
- das Abschneiden des Fadens zum Entnehmen der Stücke durch den Rand jeder Schaufel in Zusammenwirkung mit der Einführungsöffnung sichergestellt ist, und
- die Drehung des Rotors jedes Fadenstück gegen den genannten Träger aus gummiartigem Material mitnimmt, wo er durch Oberflächenhaftung gehalten wird.

2. Verfahren nach Anspruch 1, worin der Träger ein kontinuierlich extrudiertes Gummiband ist, auf dem sich die Stücke parallel zueinander anordnen.

3. Verfahren nach Anspruch 1, worin der Träger ein roher Reifen im Verlauf der Herstellung ist, auf dem die Stücke an der Stelle angeordnet werden, die durch den Aufbau des Reifens vorgesehen ist.

4. Maschine zum Auftragen von Fadenstücken auf einem Träger (2) aus rohem, gummiartigem Material, mit einer Vorrichtung, die die Entnahme der Fadenstücke (40) sicherstellt und die genannten Stücke (40) auf den genannten Trägern (2) fördert, dadurch gekennzeichnet, daß die genannte Vorrichtung die folgenden Merkmale aufweist:
- eine Zylindrische Kammer, die durch eine zylindrische Wand (11) und durch ebene Seitenwände (12) abgegrenzt ist, die senkrecht zur Achse der genannten zylindrischen Kammer stehen,
- einen Rotor (A), der um die Achse der genannten zylindrischen Kammer drehbeweglich ist, wobei der genannte Rotor mit Schaufeln (13) versehen ist, die in Querrichtung ausgerichtet sind, und die genannten Schaufeln (13) mit mindestens einem Teil der Zylindrischen Wand (11) der zylindrischen Kammer jeweils eine Aufnahme zur Entgegennahme des Fadens begrenzen,
- eine Einführungsöffnung (14) für den Faden, die in der einen der beiden Seitenwände (12) der genannten zylindrischen Kammer den genannten Aufnahmen gegenüberliegend angeordnet ist, und
- eine Freigabeöffnung (15), die in die genannte zylindrische Wand (11) in Querrichtung eingebracht ist,
und worin die Drehung des Rotors (A) das Abschneiden des Fadens zur Entnahme der Stücke (40) dank der Zusammenwirkung zwischen dem Rand einer jeden Schaufel (13) und der benachbarten Seitenwand (12) rund um die Einführungsöffnung (14) sicherstellt und jedes Fadenstück (40) zum genannten Träger (2) aus gummiartigem Material mittnimmt, wo es durch Oberflächenhaftung gehalten wird.

5. Maschine nach Anspruch 4, worin der Rotor (A) eine Anordnung von Scheiben (16) aufweist, die zueinander beabstandet und relativ zueinander während des Betriebs der Vorrichtung unverdrehbar gehalten sind, wobei der Außendurchmesser um mindestens einen Wert, der der Dicke des verwendeten Fadens entspricht, kleiner ist als der Innendurchmesser der zylindrischen Kammer, jede Scheibe mit einer identischen Anzahl von Vorsprüngen (18) versehen ist, die über ihren Umfang regelmäßig verteilt sind, die Vorsprünge (18), die zu den verschiedenen Scheiben (16) gehören, die genannten Schaufeln (13) bilden, und die genannte Maschine außerdem einen Kamm (B) aufweist, dessen Zähne (30) zwischen die Scheiben (16) hineingreifen und derart angeordnet sind, daß sie jedes Fadenstück zur Freigabeöffnung (15) führen.

6. Maschine nach Anspruch 5, worin die Zinken (30) des Kammes (B) zusammen mit einer gegenüberliegenden Wand (31) eine Freigabe-Gleitbahn (32) bilden, und worin das Spiel, das zwischen den genannten Zinken und der genannten, gegenüberliegenden Wand vorliegt, sich beim Annähern an die Freigabeöffnung (15) verringert.

7. Maschine nach einem der Ansprüche 4 bis 6, worin eine drehbare Rolle (C) mit einer Drehachse, die zur Drehachse des Rotors (A) parallel verläuft, angeordnet ist, um ihre zylindrische Fläche (51) den genannten Stücken (40) nahe der genannten Freigabeöffnung (15) darzubieten und die Stücke (40) zu begleiten, bis sie auf dem Träger (2) aus gummiartigem Material anhaften.

8. Maschine nach Anspruch 7, worin die Rolle (C) auf ihrer zylindrischen Fläche (51) eine Vielzahl von geradlinigen Rillen (52) aufweist, die parallel zur Drehachse der Rolle verlaufen und imstande sind, jeweils ein Fadenstück (40) aufzunehmen.

9. Maschine nach einem der Ansprüche 4 bis 8, worin der Winkel einstellbar ist, den jede Schaufel mit jeder schneidenden Geraden bildet, die parallel zur Rotorachse verläuft.
